# EUROPEAN PATENT SPECIFICATION

(11) **EP 3 000 633 B1**
(45) Date of publication and mention of the grant of the patent: **17.10.2018**
(21) Application number: 15186331.3
(22) Date of filing: 22.09.2015
(51) Int. Cl.: B60H 1/00, F16L 41/08

(54) **VEHICLE AIR CONDITIONING SYSTEM SEAL AND ASSEMBLY HAVING A VEHICLE AIR CONDITIONING SYSTEM SEAL**
FAHRZEUGKLIMAANLAGENDICHTUNG UND ANORDNUNG MIT EINER FAHRZEUGKLIMAANLAGENDICHTUNG
JOINT D'ÉTANCHÉITÉ DE SYSTÈME DE CLIMATISATION DE VÉHICULE ET ENSEMBLE COMPRENANT UN JOINT D'ÉTANCHÉITÉ DE SYSTÈME DE CLIMATISATION DE VÉHICULE

(30) Priority: 25.09.2014 DE 102014113926
(43) Date of publication of application: 30.03.2016
(73) Proprietor: Valeo Klimasysteme GmbH, 96476 Bad Rodach (DE)
(72) Inventor: WEBER, Jens, 96515 Sonneberg (DE)
(74) Representative: Metz, Gaëlle

(56) References cited:
- FR-A1- 2 941 518
- JP-A- H01 289 714
- US-A1- 2009 250 559

## Description

The invention relates to a vehicle air conditioning system seal and to an assembly having a vehicle air conditioning module seal.

A seal according to the preamble of claim 1 is disclosed in US 2009/0250559 A1. Such seals are used for example in order to seal the leadthrough for fluid lines through a bulkhead between a vehicle interior and an engine compartment from the penetration of moisture from the engine compartment. The fluid lines connect an air conditioning module in the vehicle interior, said air conditioning module comprising the evaporator, to modules of the vehicle air conditioner that are arranged in the engine compartment and contain, *inter alia*, the compressor.
It is the object of the invention to optimize the mounting of fluid lines in a vehicle air conditioning system.
To this end, provision is made according to the invention of a vehicle air conditioning system seal, which has a resilient sealing element and a rigid intermediate body in which at least one leadthrough for a fluid line of the vehicle air conditioning system is formed. Provision is made of an anti-twist device which limits twisting of the fluid line with respect to the vehicle air conditioning system seal, wherein the anti-twist device comprises a seal-side structure which is provided on the intermediate body and can interact with a line-side structure which is formed on the fluid line. The seal-side structure is configured such that the line-side structure comes into abutment against the seal-side structure at least when the fluid line is twisted through a maximum twist angle with respect to the intermediate body. In particular when R744 is used as the refrigerant, in the case of which a higher pressure prevails in the fluid lines than in the case of conventional refrigerants, greater torsion forces accordingly also occur when the flange connections are tightened. The anti-twist device at the vehicle air conditioning system seal (also referred to as "seal" for short in the following text) absorbs these torsion forces and passes them into the intermediate body. Via the latter, the forces can be transmitted to the housing of the air conditioning module.
It is favourable for the seal-side structure and the line-side structure to already come into form-fitting engagement during the mounting of the seal, in order to keep the maximum twist angle as small as possible. In particular on account of manufacturing tolerances, spaces can occur between the structures, however. A maximum twist angle of less than about 0.1° to 3° is desired.

The anti-twist device is preferably configured as a simple plug connection, in the case of which the seal-side structure and the line-side structure can be joined together and taken apart again in particular in a rectilinear movement without the use of tools.

According to the invention, the seal-side structure is a blind hole in the intermediate body. A complementary protrusion on a flange connected fixedly to the fluid line can then be used as the line-side structure, for example. Twisting of the flange and thus of the fluid line with respect to the intermediate body can be effectively prevented in this way.
According to a second preferred embodiment, provision is made for the seal-side structure to have at least one stop point formed on the intermediate body. The stop point interacts for example with a non-round external contour on the fluid line or on the flange of the fluid line, which comes into abutment against the stop point when the fluid line is twisted. This type of anti-twist device is implementable with low manufacturing outlay.

The intermediate body according to the invention has a plurality of in particular half-shell-shaped parts which can be put together around the fluid line such that they engage around the fluid line, wherein each of the parts defines a portion of the inner wall of the leadthrough for the fluid line. In this way, it is possible to also arrange the seal on fluid lines which are already provided with a flange.

The gap between the fluid line and the circumferential wall of the leadthrough is preferably sealed against the passage of gases and/or liquids, for example by introduced sealing material or a portion of the resilient sealing element of the seal.
The intermediate body can be radially surrounded by a portion of the resilient sealing element, which can be formed in particular in a pot-like manner. In the case of a multipart intermediate body, the intermediate-body parts can then be held together by the resilient sealing element, thereby simplifying mounting.
The seal can be designed for example for abutment against the bulkhead of the vehicle between the engine compartment and the vehicle interior. To this end, the resilient sealing element can have a bulkhead portion that bears against the bulkhead, and also further portions which bear against the housing of the air conditioning module and/or against the fluid line or the flange of the fluid line.

According to the invention, in the case of an assembly having a vehicle air conditioning system seal which is arranged at an opening in a bulkhead between an engine compartment of the vehicle and the vehicle interior, and at least one fluid line, extending through a leadthrough in the vehicle air conditioning system seal, of the air conditioning system, provision is made for the vehicle air conditioning system seal to have a resilient sealing element and a rigid intermediate body, and also an anti-twist device which limits twisting of the fluid line with respect to the vehicle air conditioning system seal. The anti-twist device comprises a seal-side structure on the intermediate body and a line-side structure formed on the fluid line. The line-side structure comes into abutment against the seal-side structure at least when the fluid line is twisted through a maximum twist angle with respect to the seal. The anti-twist device provides a mounting aid for tightening the fluid lines. Torsion forces which occur during the tightening of the connections of the fluid lines of the air conditioning system are dissipated into the housing via the intermediate body. The maximum rotation angle is preferably limited to a value of less than about 0.1° to 3°.

The seal can be configured as described above.

In a first preferred embodiment, the seal-side structure comprises a blind hole in the intermediate body and the line-side structure comprises a fixing pin that engages in the blind hole and is formed in particular on a flange of the fluid line. A form fit between the fixing pin and the blind hole is desired, although small gaps can occur for example on account of manufacturing tolerances.

The fixing pin is preferably formed by an extended portion, directed towards the intermediate body, of a positioning pin on the flange of the fluid line, wherein the positioning pin is conventionally provided as part of protection against incorrect mounting of forward and return lines of the refrigerant of the air conditioning system.

In a second preferred embodiment, the seal-side structure comprises at least one stop point and the line-side structure comprises at least one stop surface which comes into contact with the stop point at least when the fluid line is twisted through the maximum twist angle with respect to the intermediate body.

The seal-side structure can comprise for example a recess and/or a protrusion with at least two wall surfaces in an end face of the intermediate body, wherein the stop points are located in the wall surfaces. The stop points can also be configured as individual protrusions on the intermediate body, however.

The stop surface of the line-side structure is preferably formed on an outer circumferential surface of the flange of the fluid line. For example, a flange at the end of the fluid line is provided with a non-round shape such as a polygonal, in particular rectangular external contour, such that the flange can already bear against one of the stop points after a relatively small rotation angle in the event of twisting.

Preferably, the seal-side structure and the line-side structure form a form-fitting connection at least over a portion of the circumference of the flange of the fluid line. Advantageously, the stop surface and the stop points are in form-fitting engagement from the outset, in order to keep the maximum rotation angle as small as possible. On account of manufacturing tolerances, small spaces between the stop point and stop surface are possible, however.

The invention is described in more detail in the following text by way of a number of exemplary embodiments and with reference to the appended drawings, in which:
- Figure 1 shows a schematic sectional view of a fluid line having a conventional flange with a positioning pin;
- Figure 2 shows a schematic sectional view of an assembly according to the invention having a vehicle air conditioning system seal according to the invention in a first embodiment;
- Figure 3 shows a plan view of the assembly from Figure 2;
- Figures 4 to 6 schematically show mounting steps for the assembly from Figure 2;
- Figure 7 shows a schematic sectional view of an assembly according to the invention having a vehicle air conditioning system seal according to the invention in a second embodiment; and
- Figure 8 shows a plan view of the assembly from Figure 7.

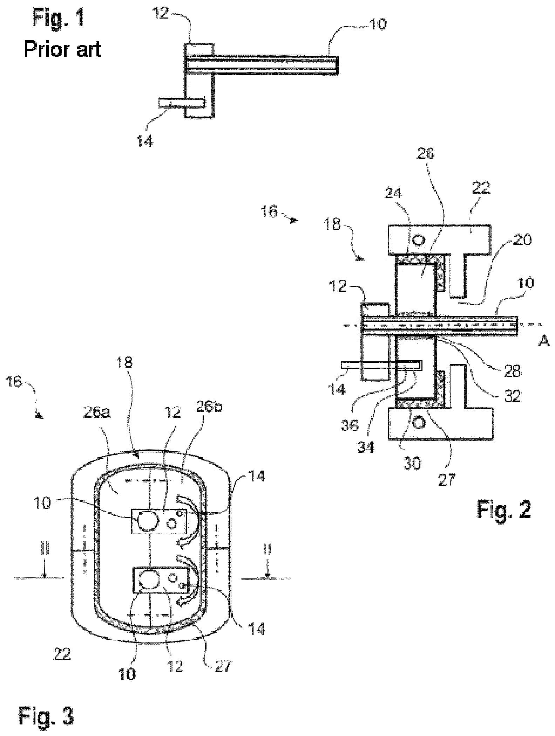

Figure 1 shows a fluid line 10, which has at one end a flange 12 that is connected to the fluid line 10 in a rotationally fixed manner. A positioning pin 14 projects at a given point from an end face, facing away from the fluid line, of the flange 12. The positioning pin 14 serves, as conventionally known, to avoid incorrect mounting when connecting forward and return lines of refrigerant in a vehicle air conditioning system.

Figures 2 and 3 show an assembly 16 according to the invention having a vehicle air conditioning system seal 18 (also referred to as "seal" for short in the following text) according to the invention. Figure 2 in this case shows a sectional view along the line II-II in Figure 3. The seal 18 seals a line leadthrough 20 for a fluid line 10 in a housing 22 of a vehicle air conditioning module. The housing 22 usually consists of a rigid plastics material.

The vehicle air conditioning module (not shown in more detail) is arranged for example on a vehicle-interior side of a bulkhead and is connected, via the fluid line 10 extending through the leadthrough 20, to a further module of the same air conditioning system, which is located on the other side of the bulkhead in the engine compartment. The seal 18 prevents the penetration of water and moisture from the engine compartment into the vehicle interior and into the interior of the housing 22.

The seal 18 consists here of a resilient sealing element 24 and of a rigid intermediate body 26 that is received within the resilient sealing element 24. In this example, the resilient sealing element 24 is produced as a one-piece body made of a suitable elastomer and has in this case a cylindrical circumferential wall portion 27 which surrounds the intermediate body 26.

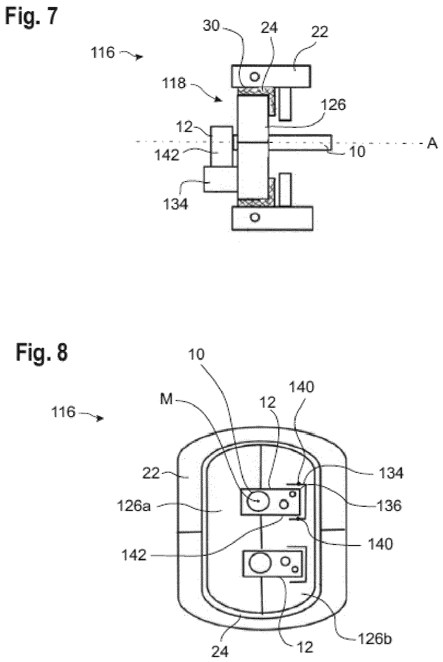

Formed in the rigid intermediate body 26 is a leadthrough opening 28 through which the fluid line 10 extends. It is possible for a plurality of leadthrough openings 28 to be present in the intermediate body 26, as is illustrated for example in Figures 3 and 8. However, it is also possible to provide only a single leadthrough opening 28.

The intermediate body 26 consists here of two parts 26a, 26b, each of which has in each case half of the inner wall of the leadthrough opening 28 for each of the fluid lines 10, such that the two parts 26a, 26b can be put together around the fluid lines 10 so that each of the fluid lines 10 is surrounded by the inner wall of the respective leadthrough opening 28.

The seal 18 is inserted into an opening 30 in the housing 22, wherein the circumferential wall portion 27 is located between the intermediate body 26 and the inner wall of the opening 30 in the housing 22. The dimensions are selected such that the seal 18 is held in the opening 30 with a desired clamping force.

Provided in this case between the inner wall of the leadthrough opening 28 in the rigid intermediate body 26 and the outer circumference of the fluid line 10 is a sealing material 32 in order to create gas- and/or liquid-tight sealing of the leadthrough opening 28. However, the sealing material could also be formed by a portion of the resilient sealing element 24 of the seal 18, said resilient sealing element 24 for example enclosing the fluid line 10 in a manner axially adjoining the intermediate body 26.

The seal 18 has an anti-twist device which limits rotation of the fluid line 10 with respect to the intermediate body 26. In this case, provision is made of a seal-side structure 34 which interacts with a line-side structure 36 such that it is only possible to twist the fluid line 10 with respect to the intermediate body 26 through a maximum twist angle, which is for example of the order of 0.1° to 3°.

In the embodiment shown here, the seal-side structure 34 is formed by a blind hole in the intermediate body 26, while the line-side structure 36 is formed by a fixing pin which engages in the blind hole.

The fixing pin is configured here as an extension of the positioning pin 14 on the flange 12 on the fluid line 10. The positioning pin 14, provided as a mounting aid on the flange 12, is extended through the flange 12 and has a seal-side end which extends in a straight line from the positioning pin 14 and which can engage as a fixing pin in the blind hole in the intermediate body 26.

It is desired for the fixing pin to fit in a form-fitting manner in the blind hole, but, on account of manufacturing tolerances, small gaps can remain, and so slight twisting within the maximum rotation angle is possible.

As a result of the anti-twist device, rotational forces that occur when the flange connections are tightened on the fluid lines 10 of the air conditioning system are transferred via the fixing pin to the intermediate body 26 and via the latter to the housing 22 of the air conditioning module. Therefore, it is possible to tighten the connections between the fluid lines 10 with sufficiently large forces in order to achieve the required sealing even for the refrigerant R744, in the case of which higher pressures prevail in the fluid lines 10 than in the case of other refrigerants.

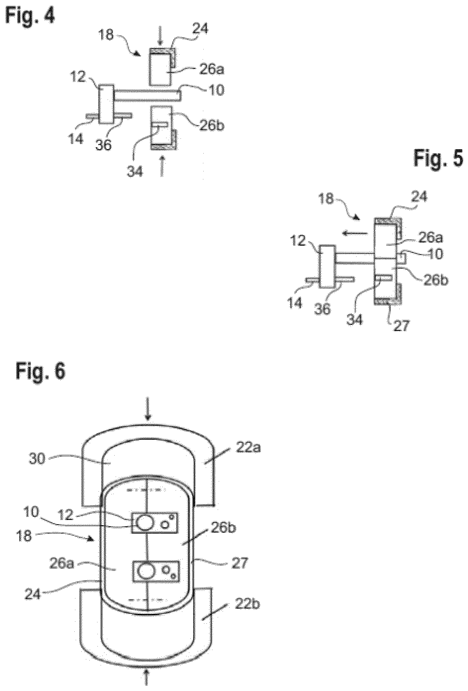

Figures 4 to 6 show the mounting of the seal 18 on the housing 22 and on the two fluid lines 10.

First of all, the resilient sealing element 24 is pulled over the flange 12 onto the fluid lines 10 and the two parts 26a, 26b of the intermediate body 26 are put together around the fluid lines 10. Then, the resilient sealing element 24 is pushed over the intermediate body 26 such that the circumferential wall portion 27 surrounds the intermediate body 26.

The fluid lines 10 and the flanges 12 thereof are rotated such that the fixing pin of the line-side structure 36 can engage in the blind hole in the seal-side structure 34. In this position, the seal 18 is pushed onto the flanges 12.

Finally, the components thus mounted are inserted into the housing 22. In this example, the housing 22 is also formed in two parts, wherein two half-shell-like parts 22a, 22b, which are pushed together around the seal 18, are provided in the region of the opening 30. The parting plane of the parts 22a, 22b of the housing 22 lies in this case perpendicularly to the parting plane of the intermediate body 26. It would also be possible to use a one-piece housing 22 and to push the seal 18, together with the fluid line 10 mounted therein, into the opening 30 in the housing.

Figures 7 and 8 show a second embodiment of an assembly 116. Components that are already known from the first embodiment and are not changed or are only changed insignificantly retain their already introduced reference signs.

In contrast to the assembly 16 that has just been described, in this case the seal-side structure 134 of the anti-twist device on the seal 118 consists of a protrusion that projects in the axial direction A from the surface of the intermediate body 126 and partially engages around the flange 12 on the fluid line 10. The protrusion defines a U-shaped recess in which one end of the rectangular flange 12 is received. On account of this geometry, the seal-side structure 134 has two stop points 140 which are located in the inner side, facing the flange 12, of the protrusion and which come into contact with the outer circumference of the flange 12 in the event of twisting about the central axis M of the fluid line 10 (indicated in Figure 8 for the upper flange 12). The line-side structure 136 is formed in this example simply by stop surfaces 142 in the rectangular external contour of the flange 12 (in this case at or close to the corners of the flange 12), and further processing or special shaping of the flange 12 is not necessary.

It would also be possible to provide a single, pin-like protrusion only at the position of each of the two stop points 140. It would likewise be possible to allow the protrusion to extend around the entire flange 12, or else to insert the flange 12 into a corresponding recess in the intermediate body 126.

The seal-side structure 134 is arranged entirely on one of the two parts 126a, 126b of the intermediate body 126.

As in the first embodiment, there is preferably a form fit between the seal-side structure 134 and the line-side structure 136, although small spaces can be accepted. Here, too, the preferred maximum rotation angle is within 0.1° to 3°. Twisting in both directions of rotation is thus only within manufacturing tolerances.

This form of anti-twist device can be used both for flanges with one fluid line and for flanges with a plurality of fluid lines (not illustrated).

## Claims

1. Vehicle air conditioning system seal, which has a resilient sealing element (24) and a rigid intermediate body (26; 126) in which at least one leadthrough opening (28) for a fluid line (10) of the vehicle air conditioning system is formed, wherein provision is made of an anti-twist device which limits twisting of the fluid line (10) with respect to the vehicle air conditioning system seal (18; 118), wherein the anti-twist device comprises a seal-side structure (34; 134) which is provided on the intermediate body (26; 126) and can interact with a line-side structure (36; 136) which is formed on the fluid line (10), and the seal-side structure (34; 134) is configured such that the line-side structure (36; 136) comes into abutment against the seal-side structure (34; 134) at least when the fluid line (10) is twisted through a maximum twist angle with respect to the intermediate body (26; 126), **characterized in that**
the seal-side structure (34) being a blind hole in the intermediate body (26) and the intermediate body (26; 126) has a plurality of parts (26a, 26b; 126a, 126b) which are able to be put together around the fluid line (10) such that they engage around the fluid line (10), wherein each of the parts (26a, 26b; 126a, 126b) defines a portion of the inner wall of the leadthrough opening (28).

2. Vehicle air conditioning system seal according to Claim 1, **characterized in that** the seal-side structure (134) has at least one stop point (140) formed on the intermediate body (126).

3. Assembly having a vehicle air conditioning system seal, according to one of the preceding claims, which comprises at least one leadthrough opening (28) and a fluid line (10), extending through the leadthrough opening (28), of the air conditioning system, wherein the vehicle air conditioning system seal (18; 118) has a resilient sealing element (24) and a rigid intermediate body (26; 126), and wherein provision is made of an anti-twist device which limits twisting of the fluid line (10) with respect to the vehicle air conditioning system seal (18; 118), and the anti-twist device comprises a seal-side structure (34; 134) on the intermediate body (26; 126) and a line-side structure (36; 136) formed on the fluid line (10), wherein the line-side structure (36; 136) comes into abutment against the seal-side structure (34; 134) at least when the fluid line (10) is twisted through a maximum twist angle with respect to the intermediate body (26; 126).

4. Assembly according to Claim 3, **characterized in that** the seal-side structure (34) is' formed by a blind hole in the intermediate body (26) and the line-side structure (36) is formed by a fixing pin that engages in the blind hole.

5. Assembly according to Claim 4, **characterized in that** the fixing pin is an extended portion, directed towards the intermediate body (26), of a positioning pin (14) on a flange (12) of the fluid line (10).

6. Assembly according to Claim 3, **characterized in that** the seal-side structure (134) comprises at least one stop point (140) and the line-side structure (136) comprises at least one stop surface (142) which comes into contact with the stop point (140) at least when the fluid line (10) is twisted through the maximum twist angle with respect to the intermediate body (126) .

7. Assembly according to Claim 6, **characterized in that** the seal-side structure (134) comprises a recess and/or a protrusion with at least two wall surfaces on an end face of the intermediate body (126), wherein the stop points (140) are located in the wall surfaces.

8. Assembly according to either of Claims 6 and 7, **characterized in that** the seal-side structure (134) and the line-side structure (136) form a form-fitting connection at least over a portion of the circumference of the flange (12) on the fluid line (10).

## Patentansprüche

1. Fahrzeugklimaanlagendichtung, die ein elastisches Dichtelement (24) und einen starren zwischenliegenden Körper (26; 126) aufweist, in dem wenigstens eine Durchführungsöffnung (28) für eine Flüssigkeitsleitung (10) der Fahrzeugklimaanlage ausgebildet ist, wobei eine Verdrehsicherung, die ein Verdrehen der Flüssigkeitsleitung (10) in Bezug auf die Fahrzeugklimaanlagendichtung (18; 118) begrenzt, vorgesehen ist, wobei die Verdrehsicherung eine dichtungsseitige Struktur (34; 134) umfasst, die an dem zwischenliegenden Körper (26; 126) vorgesehen ist und mit einer leitungsseitigen Struktur (36; 136), die an der Flüssigkeitsleitung (10) ausgebildet ist, zusammenwirken kann, und die dichtungsseitige Struktur (34; 134) auf eine solche Weise ausgelegt ist, dass die leitungsseitige Struktur (36; 136) zur Anlage an der dichtungsseitigen Struktur (34; 134) wenigstens dann kommt, wenn die Flüssigkeitsleitung (10) in einem maximalen Verdrehwinkel in Bezug auf den zwischenliegenden Körper (26; 126) verdreht wird,
**dadurch gekennzeichnet, dass**
die dichtungsseitige Struktur (34) ein Blindloch in dem zwischenliegenden Körper (26) ist und der zwischenliegende Körper (26; 126) eine Vielzahl von Teilen (26a, 26b; 126a, 126b) aufweist, die auf eine solche Weise um die Flüssigkeitsleitung (10) herum zusammengesetzt werden können, dass sie die Flüssigkeitsleitung (10) umgreifen, wobei jeder der Teile (26a, 26b; 126a, 126b) einen Abschnitt der Innenwand der Durchführungsöffnung (28) festlegt.

2. Fahrzeugklimaanlagendichtung nach Anspruch 1,
**dadurch gekennzeichnet, dass** die dichtungsseitige Struktur (134) wenigstens einen an dem zwischenliegenden Körper (126) ausgebildeten Anschlagpunkt (140) aufweist.

3. Anordnung, die eine Fahrzeugklimaanlagendichtung nach einem der vorhergehenden Ansprüche aufweist und wenigstens eine Durchführungsöffnung (28) und eine Flüssigkeitsleitung (10) umfasst, die sich durch die Durchführungsöffnung (28) der Klimaanlage erstreckt, wobei die Fahrzeugklimaanlagendichtung (18; 118) ein elastisches Dichtelement (24) und einen starren zwischenliegenden Körper (26; 126) aufweist, und wobei eine Verdrehsicherung, die ein Verdrehen der Flüssigkeitsleitung (10) in Bezug auf die Fahrzeugklimaanlagendichtung (18; 118) begrenzt, vorgesehen ist und die Verdrehsicherung eine dichtungsseitige Struktur (34; 134) an dem zwischenliegenden Körper (26; 126) und eine leitungsseitige Struktur (36; 136), die an der Flüssigkeitsleitung (10) ausgebildet ist, umfasst, wobei die leitungsseitige Struktur (36; 136) zur Anlage an der dichtungsseitigen Struktur (34; 134) wenigstens dann kommt, wenn die Flüssigkeitsleitung (10) in einem maximalen Verdrehwinkel in Bezug auf den zwischenliegenden Körper (26; 126) verdreht wird.

4. Anordnung nach Anspruch 3, **dadurch gekennzeichnet, dass** die dichtungsseitige Struktur (34) durch ein Blindloch in dem zwischenliegenden Körper (26) ausgebildet ist und die leitungsseitige Struktur (36) durch einen Befestigungsstift ausgebildet ist, der in das Blindloch eingreift.

5. Anordnung nach Anspruch 4, **dadurch gekennzeichnet, dass** der Befestigungsstift ein dem zwischenliegenden Körper (26) zugewandter verlängerter Abschnitt eines Positionierungsstifts (14) an einem Flansch (12) der Flüssigkeitsleitung (10) ist.

6. Anordnung nach Anspruch 3, **dadurch gekennzeichnet, dass** die dichtungsseitige Struktur (134) wenigstens einen Anschlagpunkt (140) umfasst und die leitungsseitige Struktur (136) wenigstens eine Anschlagfläche (142) umfasst, die wenigstens dann in Kontakt mit dem Anschlagpunkt (140) kommt, wenn die Flüssigkeitsleitung (10) in dem maximalen Verdrehwinkel in Bezug auf den zwischenliegenden Körper (126) verdreht ist.

7. Anordnung nach Anspruch 6, **dadurch gekennzeichnet, dass** die dichtungsseitige Struktur (134) eine Ausnehmung und/oder einen Vorsprung mit wenigstens zwei Wandflächen an einer Endfläche des zwischenliegenden Körpers (126) umfasst, wobei sich die Anschlagpunkte (140) in den Wandflächen befinden.

8. Anordnung nach beiden der Ansprüche 6 und 7,
**dadurch gekennzeichnet, dass** die dichtungsseitige Struktur (134) und die leitungsseitige Struktur (136) eine formschlüssige Verbindung wenigstens über einen Teil des Umfangs des Flansches (12) an der Flüssigkeitsleitung (10) bilden.

## Revendications

1. Joint d'étanchéité de système de climatisation de véhicule, comprenant un élément d'étanchéité élastique (24) et un corps intermédiaire rigide (26; 126) dans lequel au moins une ouverture traversante (28) pour une ligne de fluide (10) du système de climatisation de véhicule est formée, dans lequel il est prévu un dispositif anti-torsion qui limite la torsion de la ligne de fluide (10) par rapport au joint d'étanchéité de système de climatisation de véhicule (18; 118), dans lequel le dispositif anti-torsion comprend une structure côté joint d'étanchéité (34; 134) qui est prévue sur le corps intermédiaire (26; 126) et qui peut interagir avec une structure côté ligne (36; 136) qui est formée sur la ligne de fluide (10), et la structure côté joint d'étanchéité (34; 134) est configurée de telle sorte que la structure côté ligne (36; 136) vienne buter contre la structure côté joint d'étanchéité (34; 134) au moins lorsque la ligne de fluide (10) est tordue d'un angle de torsion maximum par rapport au corps intermédiaire (26; 126), **caractérisé en ce que** la structure côté joint d'étanchéité (34) est un trou borgne dans le corps intermédiaire (26), et le corps intermédiaire (26; 126) comprend une pluralité de parties (26a, 26b; 126a, 126b) qui peuvent être assemblées autour de la ligne de fluide (10) de telle sorte qu'elles s'engagent autour de la ligne de fluide (10), dans lequel chacune des parties (26a, 26b; 126a, 126b) définit une partie de la paroi intérieure de l'ouverture traversante (28).

2. Joint d'étanchéité de système de climatisation de véhicule selon la revendication 1, **caractérisé en ce que** la structure côté joint d'étanchéité (134) présente au moins un point d'arrêt (140) formé sur le corps intermédiaire (126).

3. Ensemble comprenant un joint d'étanchéité de système de climatisation de véhicule selon l'une des revendications précédentes, comprenant au moins une ouverture traversante (28) et une ligne de fluide (10), qui s'étend à travers l'ouverture traversante (28), du système de climatisation, dans lequel le joint d'étanchéité de système de climatisation de véhicule (18; 118) présente un élément d'étanchéité élastique (24) et un corps intermédiaire rigide (26; 126), et dans lequel il est prévu un dispositif anti-torsion qui limite la torsion de la ligne de fluide (10) par rapport au joint d'étanchéité de système de climatisation de véhicule (18; 118), et le dispositif anti-torsion comprend une structure côté joint d'étanchéité (34; 134) sur le corps intermédiaire (26; 126) et une structure côté ligne (36; 136) formée sur la ligne de fluide (10), dans lequel la structure côté ligne (36; 136) vient buter contre la structure côté joint d'étanchéité (34; 134) au moins lorsque la ligne de fluide (10) est tordue d'un angle de torsion maximum par rapport au corps intermédiaire (26; 126).

4. Ensemble selon la revendication 3, **caractérisé en ce que** la structure côté joint d'étanchéité (34) est formée par un trou borgne dans le corps intermédiaire (26) et la structure côté ligne (36) est formée par une broche de fixation qui s'engage dans le trou borgne.

5. Ensemble selon la revendication 4, **caractérisé en ce que** la broche de fixation est une partie étendue, orientée en direction du corps intermédiaire (26), d'une broche de positionnement (14) sur une bride (12) de la ligne de fluide (10).

6. Ensemble selon la revendication 3, **caractérisé en ce que** la structure côté joint d'étanchéité (134) comprend au moins un point d'arrêt (140) et la structure côté ligne (136) présente au moins une surface d'arrêt (142) qui entre en contact avec le point d'arrêt (140) au moins lorsque la ligne de fluide (10) est tordue de l'angle de torsion maximum par rapport au corps intermédiaire (126).

7. Ensemble selon la revendication 6, **caractérisé en ce que** la structure côté joint d'étanchéité (134) comporte un évidement et/ou une saillie avec au moins deux surfaces de paroi sur une face d'extrémité du corps intermédiaire (126), dans lequel les points d'arrêt (140) sont situés dans les surfaces de paroi.

8. Ensemble selon l'une ou l'autre des revendications 6 et 7, **caractérisé en ce que** la structure côté joint d'étanchéité (134) et la structure côté ligne (136) forment une connexion ajustée complémentaire au moins sur une partie de la circonférence de la bride (12) sur la ligne de fluide (10).
